# EUROPEAN PATENT SPECIFICATION

(11) **EP 3 604 026 B1**
(45) Date of publication and mention of the grant of the patent: **31.12.2025**
(21) Application number: 18306069.8
(22) Date of filing: 03.08.2018
(51) Int. Cl.: B60M 1/26, H02G 7/02

(54) **TENSIONING DEVICE FOR COMPENSATING VARIATIONS IN THE LENGTH OF TENSIONED WIRES IN A RAILWAY SYSTEM**
SPANNVORRICHTUNG ZUR KOMPENSIERUNG VON UNTERSCHIEDEN IN DER LÄNGE VON GESPANNTEN DRÄHTEN IN EINEM EISENBAHNSYSTEM
DISPOSITIF TENDEUR POUR COMPENSER LES VARIATIONS DE LONGUEUR DE CÂBLES TENDUS DANS UN SYSTÈME DE CHEMIN DE FER

(43) Date of publication of application: 05.02.2020
(73) Proprietor: ALSTOM Holdings, 93400 Saint-Ouen-sur-Seine (FR)
(72) Inventor: RUELLA, Samuele, 23854 Olginate (IT); MICHELI, Silvano, 23821 Abbadia Lariana (IT); RIVA, Matteo, 20831 Seregno (IT)
(74) Representative: Plasseraud IP

(56) References cited:
- EP-A1- 2 106 956
- WO-A1-2008/037386
- WO-A1-98/21794
- CN-A- 101 890 914
- GB-A- 289 805
- PL-B1- 228 589
- ANONYMOUS: "Power Springs - John While Springs", 13 February 2023 (2023-02-13), pages 1 - 3, XP93023142, Retrieved from the Internet <URL:https://www.jwsprings.com/products/all-lesjofors-products/springs/power-springs/> [retrieved on 20230213]

## Description

The present invention concerns a tensioning device for compensating variations in the length of tensioned wires, in particular a tensioning device which is mainly used for providing tension for messenger wires or contact wires in a network of an electrified railway.

The conductors of an overhead power line for railroad traction are installed with a very specific tension value which takes into account the tensile strength of the wires, the strength of the supporting structures, etc.

However, due to the impacts of thermal expansion and contraction and other environmental conditions, the messenger wires and the contact wires of the overhead power line change in the length under different weather conditions. In fact, the configuration assumed by the wire after tensioning is not constant and invariable over time but is closely dependent on the ambient temperature, since the material of which the wire is made, which can be copper or alloys thereof, aluminum or alloys thereof, steel or aluminum with a steel core, expands or contracts as the temperature increases or decreases.

Consequently, tension compensation devices for the messenger wires or the contact wires are widely used, and they are usually fixed on wire poles or walls or tops of tunnels and the like in the contact system of power supply.

The main reason why it is important to keep the wire tension constant is that the decrease in tensioning force caused by an elongation of the wire makes such wire more subject to oscillations caused by the wind, which can make the wire move dangerously close to other wires of different phases or to grounded parts.

On the other side, a contraction of the wires caused by thermal variations can cause unacceptable stresses on such wires or on the supports, and can cause abnormal lifting of the contact wire with respect to the rail level. Such stresses and lifting could not be compatible with a correct collection of the current by the pantograph of a railway vehicle. Likewise, an elongation of the wires caused by thermal variations can cause abnormal lowering of the contact wire, equally causing problems in the correct collection of the current.

Different systems are known to compensate variations in the length of the wires as a consequence of temperature variations.

A first system is constituted by counterweighting and consists substantially in connecting one end of the wire, by means of pulleys, to a weight which corresponds to the tensioning force of the wire or is reduced as a function of the ratio of the pulley system.

This system is known as wheel tensioner and has usually a ratio of transmission 1:3, which means that in order to have a pull force on the wires it is necessary to provide a vertical force generated by the counterweight that is 1/3 of the pull force. In this way, the tension of the wire remains unchanged as the length of the wire varies, since the installed weight is invariant.

Such system suffers the drawback that it requires a large space occupation, which is not always compatible with the installation requirements, especially in the railroad field, such as for example in tunnels, where very often it is physically impossible to provide recesses into which the counterweights might slide, or in which it might be possible to provide recesses but at excessively high costs. Another drawback of such system is the high installation cost, caused mainly by the need to resort to auxiliary structures for supporting, guiding and protecting the counterweights.

Another system is based on the use of a gas-filled compensator. In such system, one end of the wire is connected to a device which comprises a spring/damper unit with compressed gas, usually nitrogen: the hydraulic tensioner controls the tensile force in the contact line by means of the change in volume of the gas and fluid in a cylinder. The tensile force required according to the specific condition of a contact line is set by adjusting the gas pressure in the cylinder when installing the equipment; such unit provides a significantly constant load. This system has the advantage, with respect to counterweighting, of requiring a reduced space occupation for its installation, but it is not free from drawbacks, since problems are observed a few years after the first installations, mainly in relation to the loss of gas from the unit, thereby requiring continuous monitoring and maintenance. The cost of this device is also high and restricts its use to particular cases and, in addition this device reacts only to changes in the ambient temperature but not in the contact line temperature.

Compensators are also known which are actuated by an electric motor and are substantially constituted by a device having a sensor for detecting variations in the length of the wire caused by thermal variations, which drives an electric motor which in turn actuates a rod connected to the wire to be tensioned. This system has a high cost, caused also by the need to install an electrical power supply and a control panel, and by the need to have a low-voltage electric power source, which is not always available or at least not available inexpensively.

Another compensation system is constituted by a simple spring compensator. This basically *"plug and play"* system substantially uses spiral springs. To obtain a constant force it is necessary a pulley with a variable radius.

Document GB 289,805 discloses a tensioning device for compensating variations in the length of a tensioned wire comprising a grooved pulley, an elastic element and a torque reducer system represented by pulleys.

Document WO 98/21794 discloses a tensioning device for compensating variations in the length of a tensioned wire comprising a grooved pulley, an elastic element and a torque reducer system represented by two pulleys which act together a variable-radius pulley.

Document WO 2008/037386 discloses a device for compensating variations in the length of tensioned cables including a variable-radius pulley and a spiral spring.

Document CN 101890 914 discloses centrifugal fly claw ratchet wheel braking locker in the technical field of contact nets.

Document PL 228589 discloses a device for compensating changes in the length of the traction network, power cables and carrier ropes.

Document EP 2 106 956 discloses a constant strain spring compensation device.

There is therefore the need to have an innovative tensioning device for compensating variations in the length of tensioned wires which exploits a solution of the type *"plug and play".*

It is therefore an object of the present invention to provide a tensioning device for compensating variations in the length of tensioned wires which requires reduced installation time and lower encumbrance, thus overcoming the limitations of the prior art systems.

This and other objects are fully achieved by a tensioning device for compensating variations in the length of tensioned wires having the characteristics defined in independent claim 1.

Preferred embodiments of the invention are specified in the dependent claims, whose subject-matter is to be understood as forming an integral part of the present description.

Further characteristics and advantages of the present invention will become apparent from the following description, provided merely by way of a non-limiting example, with reference to the enclosed drawings, in which:
- Figure 1 shows a perspective view of a tensioning device according to the present invention, and
- Figure 2 shows a top view of the tensioning device of figure 1 in two different configurations.

A railway line is composed by contact and messenger wires which must be maintained in tension to guarantee the geometry of the spans of the supporting structure of the railway line. To maintain the shape of the span it is necessary to apply a force to the wires by means of weights, springs, pistons, and compensate the thermal dilatation of the wires.

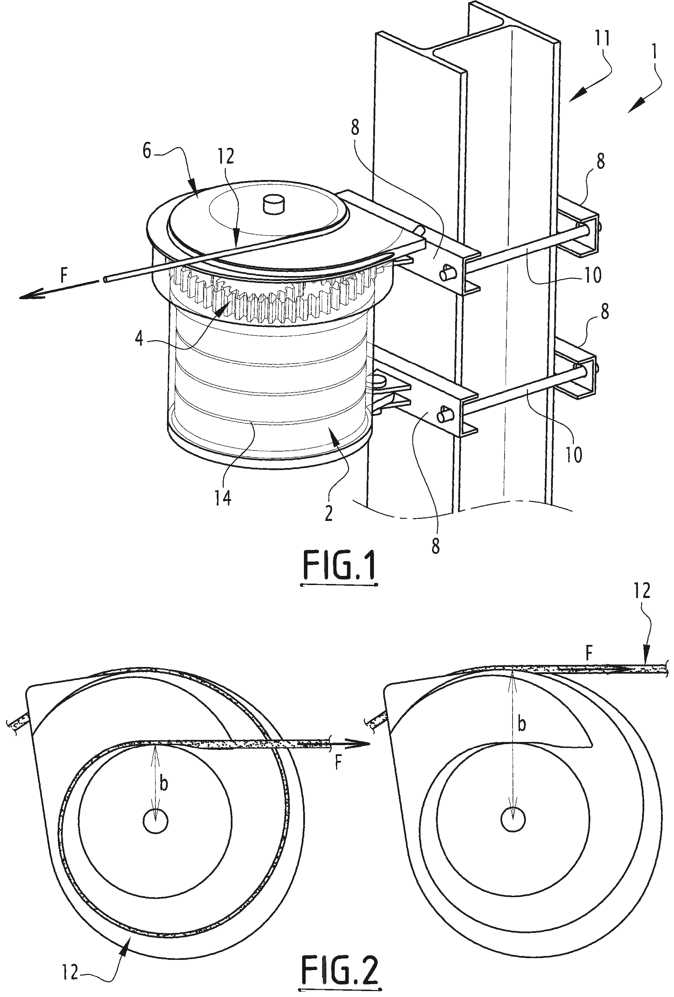

Figure 1 shows a perspective view of a tensioning device 1 for compensating variations in the length of tensioned wires of a railway system according to the present invention. The tensioning device 1 comprises an elastic element 2, a torque reducer system 4 and a grooved pulley 6, disclosed more in detail here below.

The tensioning device 1 further comprises at least a couple of supporting elements 8 connected to the elastic element 2 and arranged to be coupled together by means of coupling elements 10. Advantageously, the supporting elements 8 are metallic bars and the coupling elements 10 are screws arranged to be screwed to the metallic bars 8 in order to fix the tensioning device 1 to a supporting structure 11.

The supporting elements 8 can be different from the one here above disclosed depending on the supporting structure 11.

Advantageously, the supporting elements 8 permit also the rotation of the tensioning device 1 during the working condition over the whole compensation length. It is however necessary not to transmit the torque to the supporting structure 11.

The elastic element 2 comprises a series of per se known commercial power springs having by a well-defined load curve and being arranged to generate a torque for compensating a tensioning force F generated by a wire 12 wound around the grooved pulley 6.

In particular, when the wire 12, due to its length variations, generates on the pulley 6 the tensioning force F, the grooved pulley 6 starts rotating to absorb such wire elongations.

In order to rotate, the pulley 6 is operated by the elastic element 2.

The springs are mounted together and installed in a metallic case 14 in order to protect them from the environment.

The torque reducer system 4 is installed between the elastic element 2 and the pulley 6. The aim of the torque reducer system 4 is to multiply the torque of the elastic element 2 by a predetermined value in order properly activate the pulley 6 to absorb the energy of the tensioning device generated by the variations on the length of the wire 12.

The ratio of the torque reducer system 4 has been chosen by analyzing.

In order to get an elastic element 2 having a reasonable number of springs (and consequently acceptable dimension and weight), and given the range of force values to compensate, a ratio of the torque reducer system equal to 5 has been predetermined.

A calculation model is used to define the grooved pulley geometry and the compensation length given:
- The torque diagram of the springs (fix)
- The force value to compensate
- The number of springs
- The torque ratio.

The grooved pulley 6 has a geometry which allows maintaining the force on the wire 12 of the railway system constant. The geometry of the pulley 6 guarantees a torque/arm ratio (C [Nm] / b [m]) constant and so a constant tensile force. In particular, the pulley 6 has a standard geometry with the addition of a variable radius, which is necessary to compensate the variation of the torque of the springs of the elastic element 2 during the rotation of the pulley 6.

The torque reducer system 4 is necessary because the springs of the elastic element 2 are not able to provide the necessary torque in order to proper tensioning the wire 12. In particular, to reach a predetermined torque value coming from the springs it would be necessary to increase the number of springs but, in order to avoid such increase, the torque reducer system 4 has been introduced.

The torque reducer system 4 therefore multiplies the torque generated by the springs of the elastic element 12 to get the final predetermined torque value necessary to operate the tensioning device 1.

In this way it is possible to satisfy all the requirements needed for an automatic tensioning device for railway lines.

As above indicated the wire 12 is wound around the pulley 6 and produces a tensioning force F having the direction indicated by the arrow on figure 1.

Figure 2 is a top view of the tensioning device 1 and it shows that said tensioning device 1 is based on the principle that by modifying the radial distance of the point where the force F is applied, from the axis of the elastic element 2, it is possible to compensate the torque variation of the elastic element 2.

The tensioning device 1 operates according to the formula *C = b x F*, where "*C*' is the torque of the elastic element 2, "*b*" is the distance between the axis of the elastic element 2 and the point of contact of the wire 12 on the pulley 6, i.e. the point of application of the tensioning force F on the pulley 6, and "*F*' is the tensioning force.

In order to have the tensioning force F constant having a variable torque "*C"* it is mandatory to modify the distance "*b*". In the tensioning device 1 of the present invention the distance "b" is changed by modifying the groove geometry of the pulley 6.

Thanks to the tensioning device of the present invention it is possible to compensate the elongation of the contact and messenger wires of the railway line by maintaining a constant force without the use of counterweights.

The main advantages of the system of the present invention are the followings:
1. there are no counterweights that could damage the foundation of the system in case of falling to the ground;
2. there is a limited reversibility of the system in case of cable failure;
3. lighter springs are needed due to the presence of the torque reducer ratio;
4. plug and play device;
5. reduced installation time;
6. higher efficiency.

Clearly, the principle of the invention remaining the same, the embodiments and the details of production can be varied considerably from what has been described and illustrated purely by way of non-limiting example, without departing from the scope of protection of the present invention as defined by the attached claims.

## Claims

1. A tensioning device (1) for compensating variations in the length of a tensioned wire (12) comprising:
- a grooved pulley (6) around which the wire (12) is wound, said grooved pulley (6) comprising a groove receiving the wire and being arranged to rotate when a tensioning force (F) variation is generated by the wire (12) due to its lengths variations;
- an elastic element (2) arranged to generate a torque for compensating a tensioning force (F) generated by the wire (2); **characterized in that** it further comprises
- a torque reducer system (4) installed between the elastic element (2) and the pulley (6) and arranged to multiply the torque of the elastic element (2) by a predetermined value,
and **in that** the elastic element (2) comprises a series of power springs mounted together and installed in a metallic case (12).

2. The tensioning device (1) of claim 1, further comprising at least one supporting element (8) connected to the elastic element (2) arranged to fix the tensioning device (1) to a supporting structure (11).

3. The tensioning device of claim 2, wherein the at least one supporting element (8) comprises metallic bars arranged to be coupled together by means of screws (10) to be screwed to the metallic bars (8) in order to fix the tensioning device (1) to the supporting structure (11).

4. The tensioning device (1) of any of the preceding claims, wherein the pulley (6) has a variable radius to compensate variation of the torque of the elastic element (2) during the rotation of the pulley (6).

5. The tensioning device of claim 4, wherein the groove has a spiral shape corresponding to the variable radius of the pulley.

6. The tensioning device of claim 4 or 5, wherein a maximum radius of the groove is comprised between 1.5 times a minimal radius of the groove and 3 times the minimal radius of the groove.

7. The tensioning device (1) of any of the preceding claims, wherein the predetermined value is comprised between 3 and 7, advantageously between 4 and 6.

8. The tensioning device (1) of any of the preceding claims, wherein the elastic element is configured for varying the torque generated by the elastic element (2) while the tensioning force varies.

9. The tensioning device (1) of any of the preceding claims, arranged to operate according to the formula *C = b x F*, where "*C*" is the torque of the elastic element (2), "b" is the distance between an axis of the elastic element (2) and a point of application of the force F on the pulley (6), and "*F*" is the resulting tensioning force (F) wherein, in order to have the tensioning force (F) constant with a variable torque *"C"*, the distance "*b*" is dynamically changed by modifying the radius of the groove of the pulley (6) relative to a central point of the pulley.

## Patentansprüche

1. Spannvorrichtung (1) zum Kompensieren von Variationen in der Länge eines gespannten Drahts (12), umfassend:
- eine gefurchte Rolle (6), um welche der Draht (12) gewunden ist, wobei die gefurchte Rolle (6) eine Furche aufweist, welche den Draht aufnimmt und dazu angeordnet ist, zu rotieren, wenn eine Variation einer Spannkraft (F) durch den Draht (12) in Folge seiner Längenvariationen generiert ist;
- ein elastisches Element (2), welches angeordnet ist, um ein Drehmoment für eine Kompensation einer Spannkraft (F) zu generieren, welche durch den Draht (2) generiert ist; **dadurch gekennzeichnet, dass** sie ferner umfasst
- ein Drehmomentreduzierungssystem (4), welches zwischen dem elastischen Element (2) und der Rolle (6) installiert ist und angeordnet ist, um das Drehmoment des elastischen Elements (2) um einen vorbestimmten Wert zu vervielfachen,
und dadurch, dass das elastische Element (2) eine Reihe von Leistungsfedern umfasst, welche gemeinsam montiert sind und in einem Metallgehäuse (12) installiert sind.

2. Spannvorrichtung (1) nach Anspruch 1, ferner umfassend wenigstens ein Halterungselement (8), welches mit dem elastischen Element (2) verbunden ist, welches angeordnet ist, um die Spannvorrichtung (1) an einer Halterungsstruktur (11) zu fixieren.

3. Spannvorrichtung nach Anspruch 2, wobei das wenigstens eine Halterungselement (8) Metallstreben umfasst, welche angeordnet sind, um mit Hilfe von Schrauben (10) zusammen gekoppelt zu sein, um an den Metallstreben (8) angeschraubt zu sein, um die Spannvorrichtung (1) an der Halterungsstruktur (11) zu fixieren.

4. Spannvorrichtung (1) nach einem der vorhergehenden Ansprüche, wobei die Rolle (6) einen variierenden Radius aufweist, um Variationen des Drehmoments des elastischen Elements (2) während der Rotation der Rolle (6) zu kompensieren.

5. Spannvorrichtung nach Anspruch 4, wobei die Furche eine Spiralform aufweist, welche dem variierenden Radius der Rolle entspricht.

6. Spannvorrichtung nach Anspruch 4 oder 5, wobei ein maximaler Radius der Furche zwischen 1,5-mal einem minimalen Radius der Furche und 3-mal dem minimalen Radius der Furche umfasst ist.

7. Spannvorrichtung (1) nach einem der vorhergehenden Ansprüche, wobei der vorbestimmte Wert zwischen 3 und 7 umfasst ist, vorteilhafterweise zwischen 4 und 6.

8. Spannvorrichtung (1) nach einem der vorhergehenden Ansprüche, wobei das elastische Element für ein Variieren des durch das elastische Element (2) generierten Drehmoments eingerichtet ist, während die Spannkraft variiert.

9. Spannvorrichtung (1) nach einem der vorhergehenden Ansprüche, welche angeordnet ist, um gemäß der Formel *C = b x F* zu arbeiten, wobei "*C*" das Drehmoment des elastischen Elements (2) ist, "*b*" die Distanz zwischen einer Achse des elastischen Elements (2) und einem Angriffspunkt der Kraft F an der Rolle (6) ist und "*F*" die resultierende Spannkraft (F) ist, wobei, damit die Spannkraft (F) bei einem variierenden Drehmoment "*C*" konstant ist, die Distanz "*b*" dynamisch geändert ist durch ein Modifizieren des Radius der Furche der Rolle (6) relativ zu einem zentralen Punkt der Rolle.

## Revendications

1. Dispositif de mise en tension (1) pour compenser des variations de longueur d'un fil (12) tendu comprenant :
- une poulie rainurée (6) autour de laquelle le fil (12) est enroulé, ladite poulie rainurée (6) comprenant une rainure recevant le fil et étant agencée pour tourner lorsqu'une variation de force de mise en tension (F) est générée par le fil (12) en raison de ses variations de longueur ;
- un élément élastique (2) agencé pour générer un couple pour compenser une force de mise en tension (F) générée par le fil (2) ; **caractérisé en ce qu'**il comprend en outre
- un système réducteur de couple (4) installé entre l'élément élastique (2) et la poulie (6) et agencé pour multiplier le couple de l'élément élastique (2) par une valeur prédéterminée,
et **en ce que** l'élément élastique (2) comprend une série de ressorts de puissance montés ensemble et installés dans un boîtier métallique (12).

2. Dispositif de mise en tension (1) selon la revendication 1, comprenant en outre au moins un élément de support (8) relié à l'élément élastique (2) agencé pour fixer le dispositif de mise en tension (1) à une structure de support (11).

3. Dispositif de mise en tension selon la revendication 2, dans lequel l'au moins un élément de support (8) comprend des barres métalliques agencées pour être couplées ensemble au moyen de vis (10) à visser aux barres métalliques (8) afin de fixer le dispositif de mise en tension (1) à la structure de support (11).

4. Dispositif de mise en tension (1) selon l'une des revendications précédentes, dans lequel la poulie (6) a un rayon variable afin de compenser une variation du couple de l'élément élastique (2) lors de la rotation de la poulie (6).

5. Dispositif de mise en tension selon la revendication 4, dans lequel la rainure présente une forme en spirale correspondant au rayon variable de la poulie.

6. Dispositif de mise en tension selon la revendication 4 ou 5, dans lequel un rayon maximal de la rainure est compris entre 1,5 fois un rayon minimal de la rainure et 3 fois le rayon minimal de la rainure.

7. Dispositif de mise en tension (1) selon l'une quelconque des revendications précédentes, dans lequel la valeur prédéterminée est comprise entre 3 et 7, avantageusement entre 4 et 6.

8. Dispositif de mise en tension (1) selon l'une quelconque des revendications précédentes, dans lequel l'élément élastique est configuré pour faire varier le couple généré par l'élément élastique (2) lorsque la force de mise en tension varie.

9. Dispositif de mise en tension (1) selon l'une quelconque des revendications précédentes, agencé pour fonctionner selon la formule *C* = *b x F,* où *« C* » est le couple de l'élément élastique (2), « *b* » est la distance entre un axe de l'élément élastique (2) et un point d'application de la force F sur la poulie (6), et « *F* » est la force de mise en tension (F) résultante, dans lequel, afin de maintenir la force de mise en tension (F) constante avec un couple variable « *C* », la distance « *b* » est changée dynamiquement en modifiant le rayon de la rainure de la poulie (6) par rapport à un point central de la poulie.
